# EUROPEAN PATENT APPLICATION

(11) **EP 2 187 608 A2**
(43) Date of publication of application: **19.05.2010**
(21) Application number: 09175650.2
(22) Date of filing: 11.11.2009
(51) Int. Cl.: H04M 3/42

(54) **Call relay system, call relay device, call relay method and program**

(30) Priority: 12.11.2008 JP 2008289959
(71) Applicant: NEC CORPORATION, Tokyo (JP)
(72) Inventor: Kobayashi, Ataru, Tokyo (JP); Tamura, Toshiyuki, Tokyo (JP); Prasad, Anand, Tokyo (JP); Schmid, Stefan, 69115, Heidelberg (DE)
(74) Representative: Betten & Resch

(57) **Abstract**

A call relay system includes: an outgoing call terminal; an incoming call terminal; and a call relay device which relays a call from the outgoing call terminal to the incoming call terminal. The call relay device includes: a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section; a receiving side report acquisition section which acquires, from the incoming call terminal, a receiving side report indicating an evaluation attribute regarding the call; and a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information regarding the acquired call and registers the correlated information in the call attribute storage section.

## Description

This application is based upon and claims the benefit of priority from Japanese patent application No. 2008-289959 filed on November 12, 2008, the disclosure of which is incorporated herein in its entirety by reference.

### BACKGROUND OF THE INVENTION

### Technical Field

The present invention relates to a call relay system, a call relay device, a call relay method and a program for relaying a call to an incoming call terminal connected via an incoming call network from an outgoing call terminal connected via an outgoing call network.

### Background Art

Recently, technology including voice over Internet protocol (VoIP) has been studied to develop services using Internet protocols (IP) on a telephone network. Information processing capability of communication terminals has been enhanced and communication terminals are becoming comparable to personal computers (PC). As a result of these developments, various services using the telephone network can be provided. As more and more services have been provided, there is a concern that unwanted calls for some users may increase, including sales calls using a voice automatic answering system. However, since some users may want to receive such telephone calls that may be unwanted calls for other users, it is not desirable to completely eliminate the above-described services.

An approach to avoid unwanted calls has been made in which telephone numbers of specific callers are registered in a rejection list of a communication terminal so that incoming calls from the registered callers are not received by the communication terminal.

Japanese Unexamined Patent Application, First Publication No. 2004-48441 (Hereinafter, referred to as Patent Document 1) discloses a method to avoid disadvantages caused by unwanted calls. According to Patent Document 1, with respect to incoming calls from communication terminals having a telephone number other than those previously registered, those appearing in an outgoing call history and those appearing in the incoming call history with which a user talked for a period of time longer than a certain period of time, an off-hook signal is automatically transmitted to the incoming call and the caller is charged. Such an approach discourages callers making unwanted calls.

In the related art methods, however, with respect to a call which does not report a telephone number, it is not possible to specify the call since no telephone number of the caller is reported by the communication terminal. Another approach is to reject all the calls that do not report their telephone numbers. However, there has been a problem in that non-unwanted calls that do not report their telephone numbers are also rejected.

Since IP telephone networks are increasing in number and call charges are being reduced, the approach disclosed in Patent Document 1 becomes less effective to discourage callers from making unwanted calls.

### SUMMARY OF THE INVENTION

An exemplary object of the invention is to provide a call relay system, a call relay device, a call relay method and a program for specifying unwanted calls regardless of whether a telephone number of a caller is reported or not.

A call relay system according to a first exemplary aspect of the invention includes: an outgoing call terminal; an incoming call terminal; and a call relay device which relays a call from the outgoing call terminal to the incoming call terminal. The call relay device includes: a relay section which relays the call from the outgoing call terminal to the incoming call terminal, correlates a telephone number of the outgoing call terminal indicated by the call with a telephone number of the incoming call terminal indicated by the call and registers call history information including the telephone umbers of the outgoing call terminal and the incoming call terminal in a call history storage section; a receiving side report acquisition section which acquires, from the incoming call terminal, a receiving side report indicating an evaluation attribute regarding the call; and a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information regarding the acquired call and registers the correlated information in the call attribute storage section.

A call relay device according to a second exemplary aspect of the invention relays a call to an incoming call terminal connected via an incoming call network from an outgoing call terminal connected via an outgoing call network. The call relay device includes: a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section; a receiving side report acquisition section which acquires, from the incoming call terminal, a receiving side report indicating an evaluation attribute regarding the call; and a call attribute setting section which acquires, from the call history storage section, the call history information regarding the call indicated by the acquired receiving side repart, correlates the evaluation attribute indicated by the receiving side report with the telephone numbers of the outgoing call terminal and the incoming call terminal included in the acquired call history information and registers the correlated information in the call attribute storage section.

A call relay method according to a third exemplary aspect of the invention uses a call relay system including an outgoing call terminal, an incoming call terminal and a call relay device which relays a call from the outgoing call terminal to the incoming call terminal. The call relay method includes: relaying the call from the outgoing call terminal to the incoming call terminal; correlating a telephone number of the outgoing call terminal indicated by the call with a telephone number of the incoming call terminal indicated by the call; registering call history information including the telephone numbers of the outgoing call terminal and the incoming call terminal in a call history storage section; acquiring, from the incoming call terminal, a receiving side report indicating an evaluation attribute regarding the call; acquiring, from the call history storage section, the call history information regarding the call indicated by the receiving side report; correlating the evaluation attribute indicated by the receiving side report with the telephone numbers of the outgoing call terminal and the incoming call terminal included in the acquired call history information regarding the acquired call; and registering the correlated information in a call attribute storage section.

A program according to a fourth exemplary aspect of the invention causes a call relay device which relays a call to an incoming call terminal connected via an incoming call network from an outgoing call terminal connected via an outgoing call network to function as: a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section; a receiving side report acquisition section which acquires, from the incoming call terminal, a receiving side report indicating an evaluation attribute regarding the call; and a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information regarding the acquired call and registers the correlated information in the call attribute storage section.

### BRIEF DESCRIPTION OF THE DRAWINGS

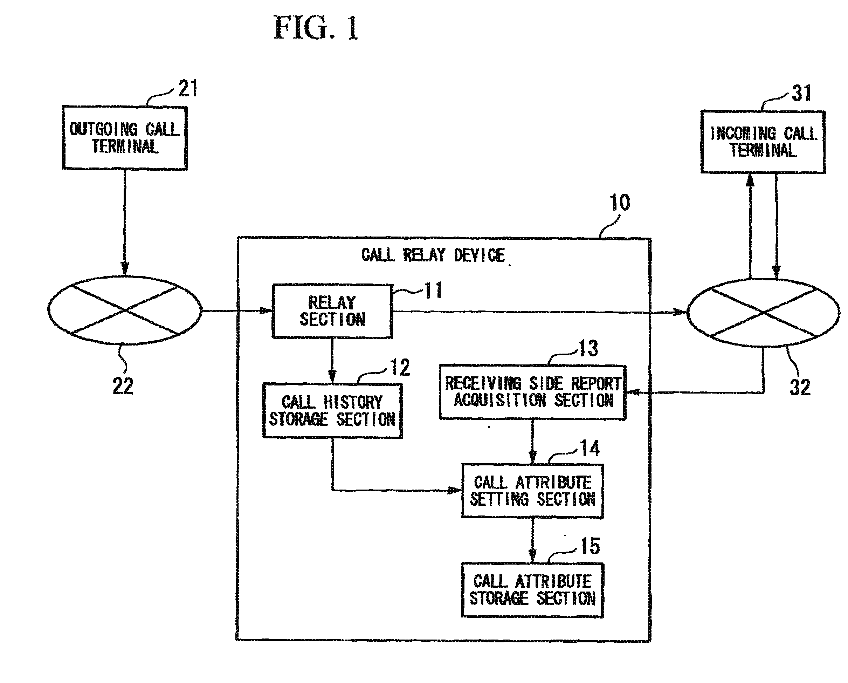

FIG. 1 is a block diagram schematically illustrating a configuration of a call relay system according to an exemplary embodiment of the invention.

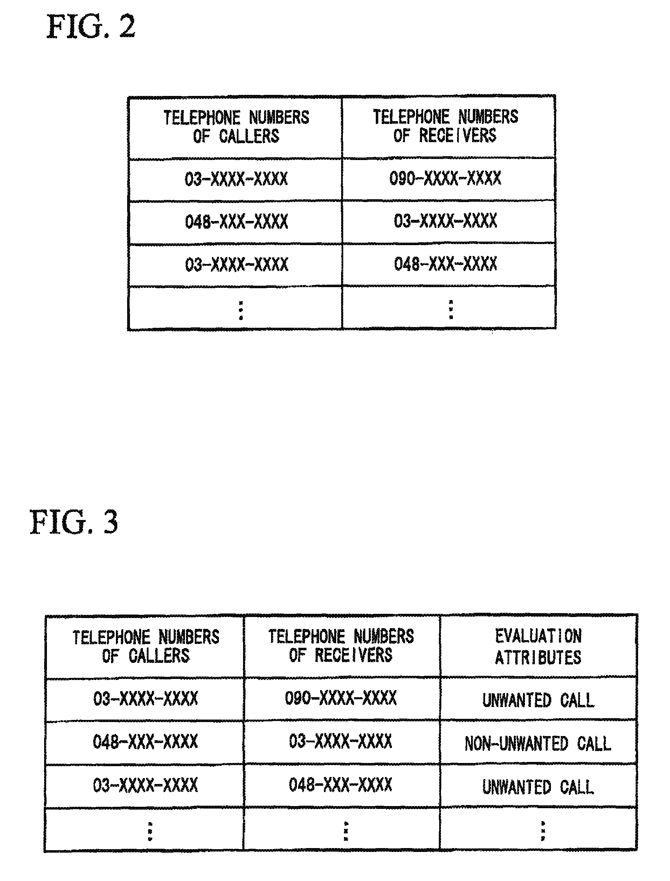

FIG. 2 illustrates a call history table stored in a call history storage section.
FIG 3 illustrates a call attribute table stored in a call attribute storage section.

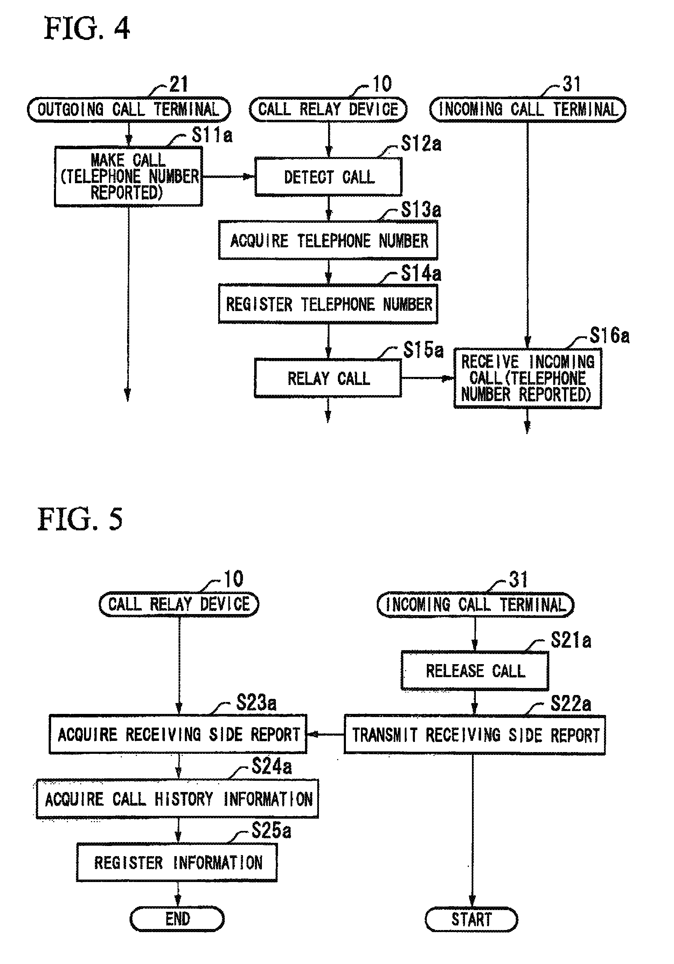

FIG. 4 is a flowchart which illustrates an operation of a call relay system when an outgoing call terminal makes a call, in a case where the outgoing call terminal makes the call with a telephone number being reported and an incoming call terminal transmits a receiving side report after the call is released.
FIG 5 is a flowchart which illustrates an operation of the call relay system when the incoming call terminal transmits the receiving side report, in a case where the outgoing call terminal makes a call with a telephone number being reported and an incoming call terminal transmits a receiving side report after the call is released.

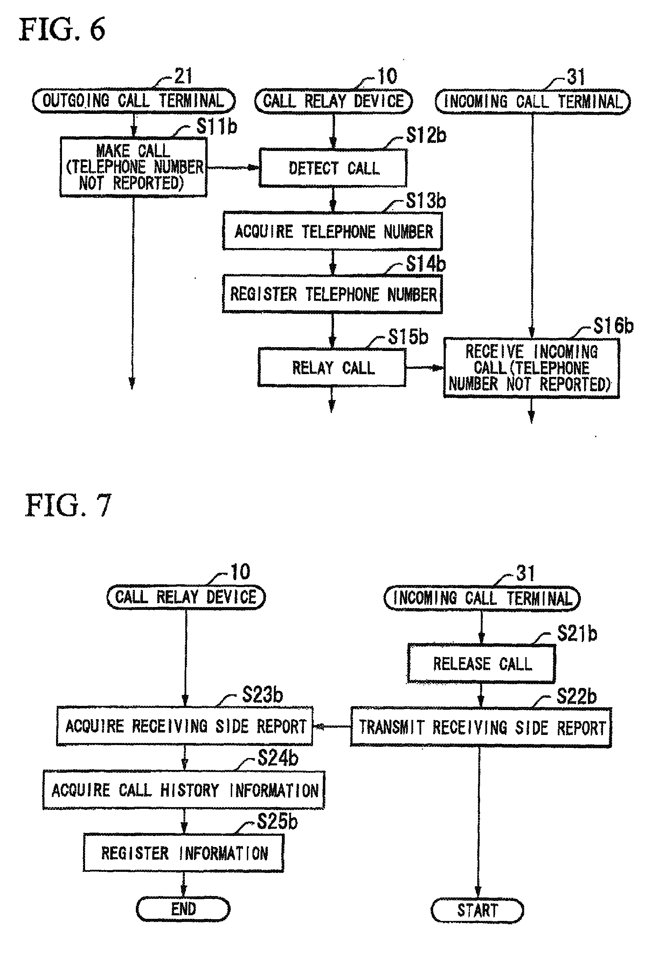

FIG 6 is a flowchart which illustrates an operation of the call relay system when the outgoing call terminal makes a call, in a case where the outgoing call terminal makes the call without reporting the telephone number and the incoming call terminal transmits the receiving side report after the call is released.
FIG. 7 is a flowchart which illustrates an operation of the call relay system when the incoming call terminal transmits the receiving side report, in a case where the outgoing call terminal makes the call without reporting the telephone number and the incoming call terminal transmits the receiving side report after the call is released.

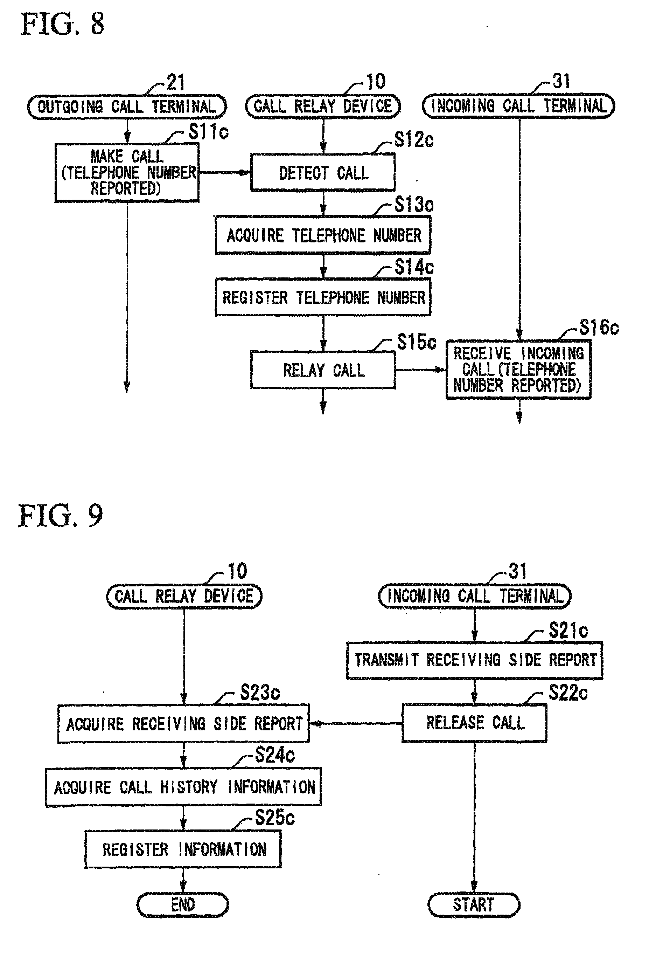

FIG. 8 is a flowchart which illustrates an operation of the call relay system when the outgoing call terminal makes a call, in a case where the outgoing call terminal makes a call with a telephone number being reported and an incoming call terminal transmits a receiving side report before the call is released.
FIG. 9 is a flowchart which illustrates an operation of the call relay system when the incoming call terminal transmits the receiving side report, in a case where the outgoing call terminal makes a call with a telephone number being reported and the incoming call terminal transmits a receiving side report before the call is released.

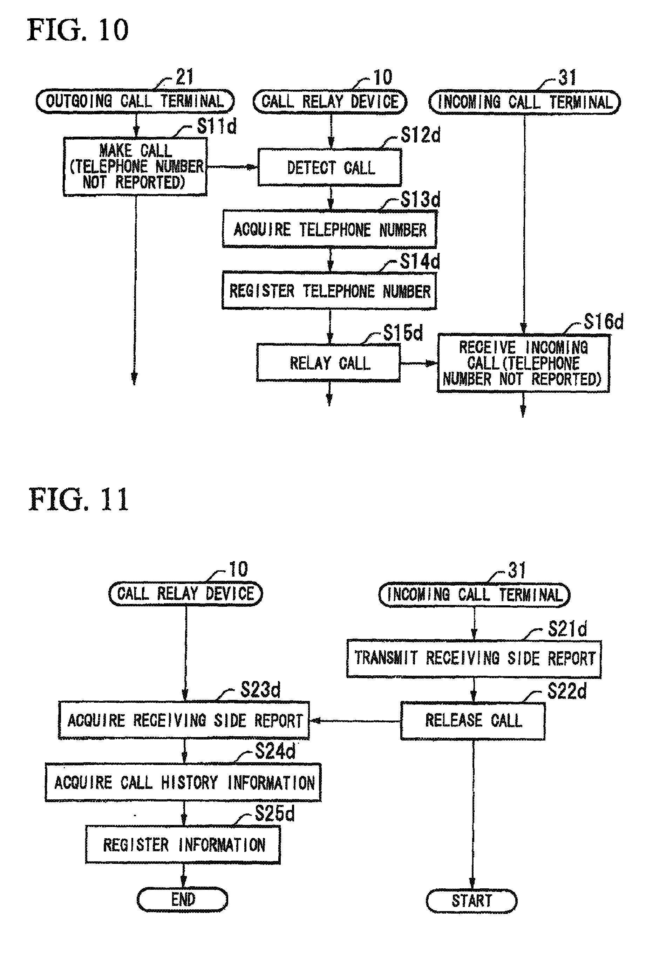

FIG 10 is a flowchart which illustrates an operation of the call relay system when the outgoing call terminal makes a call, in a case where the outgoing call terminal makes the call without reporting the telephone number and the incoming call terminal transmits the receiving side report before the call is released.
FIG 11 is a flowchart which illustrates an operation of the call relay system when the incoming call terminal transmits the receiving side report, in a case where the outgoing call terminal makes the call without reporting the telephone number and the incoming call terminal transmits the receiving side report before the call is released.

### EXEMPLARY EMBODIMENT

Hereinafter, embodiments of the invention will be described in detail with reference to the accompanying drawings.

FIG 1 is a block diagram schematically illustrating a configuration of a call relay system according to one exemplary embodiment of the present invention.

The call relay system includes a call relay device 10, an outgoing call terminal 21, an outgoing call network 22, an incoming call terminal 31 and an incoming call network 32.

The call relay device 10 is connected to the outgoing call network 22 and the incoming call network 32, and relays a call made by the outgoing call terminal 21 to the incoming call terminal 31. If the call relay system is an IP telephone system, the call relay device 10 has a function of a server, such as a call session control function (CSCF) server and a session initiation protocol (SIP) server The outgoing call terminal 21 makes a call to the incoming call terminal 31.

The incoming call terminal 31 receives a call from the outgoing call terminal 21.

The incoming call terminal 31 also transmits, to the call relay device 10, a receiving side report indicating an evaluation attribute regarding the received call. The evaluation attribute herein is information indicating whether or not the received call is an unwanted call.

For the ease of illustration, only a single outgoing call terminal 21, outgoing call network 22, receiving terminal 31 and receiving network 32 are illustrated in FIG 1. Actually, however, the call relay device 10 is connected to a plurality of terminals and networks.

The call relay device 10 includes a relay section 11, a call history storage section 12, a receiving side report acquisition section 13, a call attribute setting section 14 and a call attribute storage section 15.

The relay section 11 relays a call from outgoing call terminal 21 to the incoming call terminal 31, correlates a telephone number of the outgoing call terminal 2 with a telephone number of the incoming call terminal 31, and registers the correlated information in a call history table of the call history storage section 12.

The receiving side report acquisition section 13 acquires a receiving side report transmitted from the incoming call terminal 31.

The call attribute setting section 14 acquires a call indicated by the receiving side report from the call history storage section 12, correlates the acquired call with an evaluation attribute of the receiving side report and registers the correlated information in a call attribute table of the call attribute storage section 15.

FIG. 2 illustrates the call history table stored in the call history storage section 12.

As illustrated in FIG 2, telephone numbers of the callers (that is, telephone numbers of the outgoing call terminals) and telephone numbers of the receivers (that is, telephone numbers of the incoming call terminals) are registered in the call history table. Hereinafter, information regarding pairs of the telephone numbers of the caller and the telephone numbers of the receiver stored in the call history table is called "call history information."

FIG. 3 illustrates a call attribute table stored in the call attribute storage section 15.

As illustrated in FIG. 3, telephone numbers of the callers, telephone numbers of the receivers and evaluation attributes are registered in the call attribute table.

An operation of the call relay system according to the exemplary embodiment will be described below.

First, an operation of a call relay system when an outgoing call terminal 21 makes a call, in a case where the outgoing call terminal 21 makes a call with a telephone number being reported and an incoming call terminal 31 transmits a receiving side report after the call is released will be described.

FIG 4 is a flowchart which illustrates an operation of a call relay system when an outgoing call terminal makes a call, in a case where the outgoing call terminal makes a call with a telephone number being reported and an incoming call terminal transmits a receiving side report after the call is released.

First, the outgoing call terminal 21 makes a call to the incoming call terminal 31 with the telephone number of the caller being reported to the incoming call terminal 31 (step S11a). "To report the telephone number of the caller" means that the incoming call terminal 31 does not add to the call a flag indicating that the telephone number of the caller is not reported or the incoming call terminal 31 adds a flag to the call explicitly indicating that the telephone number is reported. When the outgoing call terminal 21 makes a call with the telephone number of the caller being reported, the relay section 11 of the call relay device 10 detects the call via the outgoing call network 22 (step S12a). When the call is detected, the relay section 11 acquires the telephone number of the caller and the telephone number of the receiver from the acquired call (step S13a). That is, the relay section 11 acquires the telephone number of outgoing call terminal 21 and the telephone number of incoming call terminal 31.

After the telephone numbers are acquired, the relay section 11 correlates the telephone number of the outgoing call terminal 21 with the telephone number of the incoming call terminal 31 and registers the correlated information in the call history table of the call history storage section 12 (step S14a). The relay section 11 overwrites, among the information in the call history table stored in the call history storage section 12, the call history information having the same telephone number of the receiver as that of the call acquired in step S13a with the information regarding the newly acquired call and registers the overwritten information. In this manner, the telephone number of the receiver can be specified uniquely in the call history table of the call history storage section 12. After the information is registered in the call history storage section 12, the relay section 11 relays the call to the incoming call terminal 31 via the incoming call network 32 (step S15a). In this manner, the call is received by the incoming call terminal 31 with the telephone number of the caller being reported (step S16a).

Next, an operation of the call relay system when the incoming call terminal 31 transmits the receiving side report, in a case where the outgoing call terminal 21 makes a call with a telephone number being reported and the incoming call terminal 31 transmits a receiving side report after the call is released will be described.

FIG. 5 is a flowchart which illustrates an operation of the call relay system when the incoming call terminal transmits the receiving side report in a case where the outgoing call terminal makes a call with a telephone number being reported and an incoming call terminal transmits a receiving side report after the call is released.

After the user closes the telephone call with the outgoing call terminal 21, the user presses a telephone call end burton or other buttons of the incoming call terminal 31 or the outgoing call terminal 21 cuts the telephone call off so that the incoming call terminal 31 releases the call (step S21a). The user presses an unwanted call designation button or other buttons on the incoming call terminal 31 after closing the telephone call with the outgoing call terminal 21, or the user dials a specific number which is used to report that the call was an unwanted call after closing the telephone call with the outgoing call terminal 21. In this manner, the incoming call terminal 31 transmits the receiver side report to the call relay device 10 (step S22a). The evaluation attribute included in the receiving side report indicates that the call was an unwanted call if the user presses the unwanted call designation button, for example, or dials a specific number to report that the call was an unwanted call. The evaluation attribute also indicates that the call was not an unwanted call if the user presses a non-unwanted call designation button, for example, or dials a specific number to report that the call was not an unwanted call.

When the incoming call terminal 31 transmits the receiving side report, the receiving side report acquisition section 13 of the call relay device 10 acquires a receiving side report (step S23a). After the receiving side report acquisition section 13 acquires the receiving side report, the call attribute setting section 14 acquires, from the call history table of the call history storage section 12, call history information regarding the call of which the incoming call terminal 31 is the receiver (step S24a). Since the telephone number of the receiver can be uniquely specified in the call history table of the call history storage section 12 as described above, only single call history information exists in which the incoming call terminal 31 is the receiver. This call history information is related to the most recent call that the incoming call terminal 31 received.

After the call attribute setting section 14 acquires the call history information is acquired, it correlates the telephone number of the caller and the telephone number of the receiver include in the call history information, and the evaluation attribute indicated in the receiving side report acquired by the receiving side report acquisition section 13 and registers the correlated information in the call attribute storage suction 15 (step S25a). In this manner, information regarding whether or not the call from a certain caller to a certain receiver is an unwanted call is accumulated in the call attribute storage section 15.

The operation of the call relay system in a case where the outgoing call terminal 21 makes a call with the telephone number being reported and the incoming call terminal 31 transmits the receiving side report after the call is released has been described above.

Next, an operation of the call relay system when the outgoing call terminal 21 makes a call, in a case where the outgoing call terminal 21 makes the call without reporting the telephone number and the incoming call terminal 31 transmits the receiving side report after the call is released.

FIG 6 is a flowchart which illustrates an operation of the call relay system when the outgoing call terminal makes a call, in a case where the outgoing call terminal makes the call without reporting the telephone number and the incoming call terminal transmits the receiving side report after the call is released.

First, the outgoing call terminal 21 makes a call to the incoming call terminal 31 without reporting the telephone number of the caller (step S11b). "To not report the telephone number" means that the outgoing call terminal 21 adds, to a call, a flag for not reporting the telephone number of the caller. When the outgoing call terminal 21 makes a call without reporting the telephone number, the relay section 11 of the call relay device 10 detects the call via the outgoing call network 22 (step S12b). After the call is detected, the relay section 11 acquires the telephone number of the caller and the telephone number of the receiver from the acquired call (step S13b). That is, the relay section 11 acquires the telephone number of the outgoing call terminal 21. and the telephone number of the incoming call terminal 31. In general, if the not-reporting of the telephone number is set up by an operation of the outgoing call terminal, since the telephone number of the caller is acquired by the call relay device 10, the call relay device 10 can acquire the telephone number of the outgoing call terminal 21 irrespective of whether or not the telephone number is reported.

After the telephone number is acquired, the relay section 11 correlates the telephone number of the outgoing call terminal 21 with the telephone number of the incoming call terminal 31 and registers tha correlated information in the call history table of the call history storage section 12 (step S14b), The relay section 11 overwrites, among the information in the call history table stored in the call history storage section 12, the call history information having the same telephone number of the receiver as that of the call acquired in step S13b with the information regarding the newly acquired call and registers the overwritten information. In this manner, the telephone number of the receiver can be specified uniquely in the call history table of the call history storage section 12. After the information is registered in the call history storage section 12, the relay section 11 relays the call to the incoming call terminal 31 via the incoming call network 32 (step S15b). In this manner, the call is received by the incoming call terminal 31 with the telephone number of the caller not being reported (stop S16b).

Next, an operation of the call relay system when the incoming call terminal 31 transmits the receiving side report, in a case where the outgoing call terminal 21 makes the call without reporting the telephone number and the incoming call terminal transmits the receiving side report after the call is released will be described.

FIG. 7 is a flowchart which illustrates an operation of the call relay system when the incoming call terminal transmits the receiving side report in a case where the outgoing call terminal makes the call without reporting the telephone number and the incoming call terminal transmits the receiving side report after the call is released.

After the user closes the telephone call with the outgoing call terminal 21, the user presses a telephone call end button or other buttons of the incoming call terminal 31 or the outgoing call terminal 21 cuts the telephone call off so that the incoming call terminal 31 releases the call (step S21b). After closing the telephone call with the outgoing call terminal 21, the user presses an unwanted call designation button or other buttons on the incoming call terminal 31 or dials a specific number alter closing the telephone call with the outgoing call terminal 21 in order to report that the call was an unwanted call. In this manner, the incoming call terminal 31 transmits the receiver side report to the call relay device 10 (step S22b). The evaluation attribute included in the receiving side report indicates that the call was an unwanted call if the user presses the unwanted call designation button, or dials a specific number to report that the call was an unwanted call, for example. The evaluation attribute also indicates that the call was not an unwanted call if the user presses a non-unwanted call designation button, or dials a specific number to notify that the call was not an unwanted call, for example.

When the incoming call terminal 31 transmits the receiving side report, the receiving side report acquisition section 13 of the call relay device 10 acquires a receiving side report (step S23b). After the receiving side report acquisition section 13 acquires the receiving side report, the call attribute setting section 14 acquires, from the call history table of the call history storage section 12, call history information regarding the call of which the incoming call terminal 31 is the receiver (step S24b). Since the telephone number of the receiver can be uniquely specified in the call history table of the call history storage section 12 as described above, only single call history information exists in which the incoming call terminal 31 is the receiver. This call history information is related to the most recent call that the incoming call terminal 31 received.

After the call history information is acquired, the call attribute setting section 14 correlates the telephone number of the caller and the telephone number of the receiver included in the call history information and the evaluation attribute indicated in the receiving side report acquired by the receiving side report acquisition section 13 and registers the correlated information in the call attribute storage section 15 (step S25b). In this manner, information regarding whether or not the call from a certain caller to a certain receiver is an unwanted call is accumulated in the can attribute storage section 15.

The operation of the call relay system in a case where the outgoing call terminal 21 makes a call with the telephone number not being reported and the incoming call terminal 31 transmits the receiving side report after the call is released has been described above.

Next, an operation of a call relay system when an outgoing call terminal 21 makes a call, in a case where the outgoing call terminal 21 makes a call with a telephone number being reported and an incoming call terminal 31 transmits a receiving side report before the call is released will be described.

FIG. 8 is a flowchart which illustrates an operation of a call relay system when an outgoing call terminal makes a call, in a case where the outgoing call terminal makes a call with a telephone number being reported and an incoming call terminal transmits a receiving side report before the call is released.

First, the outgoing call terminal 21 makes a call to the incoming call terminal 31 with the telephone number of the caller being reported to the incoming call terminal 31 (step S11c).

"To report the telephone number of the caller" means that the incoming call terminal 31 does not add to the call a flag indicating that the telephone number of the caller is not reported or the incoming call terminal 31 adds a flag to the call explicitly indicating that the telephone number is reported. When the outgoing call terminal 21 makes a call with the telephone number of the caller being reported, the relay section 11 of the call relay device 10 detects the call via the outgoing call network 22 (step S12c). When the call is detected, the relay section 11 acquires the telephone number of the caller and the telephone number of the receiver from the acquired call (step S13c). That is, the relay section 11 acquires the telephone number of outgoing call terminal 21 and the telephone number of incoming call terminal 31.

After the telephone numbers are acquired, the relay section 11 correlates the telephone number of the outgoing call terminal 21 with the telephone number of the incoming call terminal 31 and registers the correlated information in the call history table of the call history storage section 12 (step S14c). The relay section 11 overwrites, among the information in the call history table stored in the call history storage section 12, the call history information having the same telephone number of the receiver as that of the call acquired in step S13c with the information regarding the newly acquired call and registers the overwritten information. In this manner, the telephone number of the receiver can be specified uniquely in the call history table of the call history storage section 12. After the information is registered in the call history storage section 12, the relay section 11 relays the call to the incoming call terminal 31 via the incoming call network 32 (step S15c). In this manner, the call is received by the incoming call terminal 31 with the telephone number of the caller being reported (step S16c).

Next, an operation of the call relay system when the incoming call terminal 31 transmits the receiving side report, in a case where the outgoing call terminal 21 makes a call with a telephone number being reported and the incoming call terminal 31 transmits a receiving side report before the call is released will be described.

FIG. 9 is a flowchart which illustrates an operation of the call relay system when the incoming call terminal transmits the receiving side report, in a case where the outgoing call terminal makes a call with a telephone number being reported and the incoming call terminal transmits a receiving side report before the call is released.

While the outgoing call terminal 21 is making a call or while the user is talking with the outgoing call terminal 21, the user presses an unwanted call designation button or other buttons of the incoming call terminal 31. In this manner, the incoming call terminal 31 transmits the receiver side report to the call relay device 10 (step S21c). The evaluation attribute included in the receiving side report indicates that the call was an unwanted call if the user presses the unwanted call designation button, or dials a specific number to report that the call was an unwanted call, for example, The evaluation attribute also indicates that the call was not an unwanted call if the user presses a non-unwanted call designation button, or dials a specific number to report that the call was not an unwanted call, for example. After the incoming call terminal 31 transmits the receiving side report, the user presses a telephone call end button or other buttons of the incoming call terminal 31 or the outgoing call terminal 21 cuts the telephone call off so that the incoming call terminal 31 releases the call (step S22c).

When the incoming call terminal 31 transmits the receiving side report in step S21c, the receiving side report acquisition section 13 of the call relay device 10 acquires a receiving side report (step S23c). After the receiving side report acquisition section 13 acquires the receiving side report, the call attribute setting section 14 acquires, from the call history table of the call history storage section 12, call history information regarding the call of which the incoming call terminal 31 is the receive (step S24c). Since the telephone number of the receiver can be uniquely specified in the call history table of the call history storage section 12 as described above, only single call history information exists in which the incoming call terminal 31 is the receiver. This can history information is related to the most recent call that the incoming call terminal 31 received.

After the call history information is acquired, the call attribute setting section 14 correlates the telephone number of the caller and the telephone number of the receiver included in the call history information and the evaluation attribute indicated in the receiving side report acquired by the receiving side report acquisition section 13 and registers the correlated information in the call attribute storage section 15 (step S2Sc). In this manner, information regarding whether or not the call from a certain caller to a certain receiver is an unwanted call is accumulated in the call attribute storage section 15.

The operation of the call relay system in a case where the outgoing call terminal 21 makes a call with the telephone number being reported and the incoming call terminal 31 transmits the receiving side report before the call is released has been described above.

Next, an operation of the call relay system when the outgoing call terminal 21 makes a call, in a case where the outgoing call terminal 21 makes the call without reporting the telephone number and the incoming call terminal 31 transmits the receiving side report before the call is released.

FIG. 10 is a flowchart which illustrates an operation of the call relay system when the outgoing call terminal makes a call, in a case where the outgoing call terminal makes the call without reporting the telephone number and the incoming call terminal transmits the receiving side report before the call is released.

First, the outgoing call terminal 21 makes a call to the incoming call terminal 31 without reporting the telephone number of the caller (step S11d). "To not report the telephone number" means that the outgoing call terminal 21 adds, to a call, a flag for not reporting the telephone number of the caller. When the outgoing call terminal 21 makes a call without reporting the telephone number, the relay section 11 of the call relay device 10 detects the call via the outgoing call network 22 (step S12d). After the call is detected, the relay section 11 acquires the telephone number of the caller and the telephone number of the receiver from the acquired call (step S13d). That is, the relay section 11 acquires the telephone number of the outgoing call terminal 21 and the telephone number of the incoming call terminal 31. In general, even if the not-reporting of the telephone number is set up by the user operating the outgoing call terminal, since the telephone number of the caller is acquired by the call relay device 10, the call relay device 10 can acquire the telephone number of the outgoing call terminal 21 irrespective of whether or not the telephone number is reported.

Altar the telephone number is acquired, the relay section 11 correlates the telephone number of the outgoing call terminal 21 with the telephone number of the incoming call terminal 31 and registers the correlated information in the call history table of the call history storage section 12 (step S 14d). The relay section 11 overwrites, among the information is the call history table stored in the call history storage section 12, the call history information having the same telephone number of the receiver as that of the call acquired in step S13d with the information regarding the newly acquired call and registers the overwritten information. In this manner, the telephone number of the receiver can be specified uniquely in the call history table of the call history storage section 12. After the information is registered in the call history storage section 12, the relay section 11 relays the call to the incoming call terminal 31 via the incoming call network 32 (step S15d). In this manner, the call is received by the incoming call terminal 31 with the telephone number of the caller not being reported (step S16d).

Next, an operation of the call relay system when the incoming call terminal 31 transmits the receiving side report, in a case where the outgoing call terminal 21 makes a call with a telephone number not being reported and the incoming call terminal 31 transmits the receiving side report before the call is released will be described.

FIG. 11 is a flowchart which illustrates an operation of the call relay system when the incoming call terminal transmits the receiving side report, in a case where the outgoing call terminal makes a call with a telephone number not being reported and the incoming call terminal transmits the receiving side report before the call is released.

While the outgoing call terminal 21 is making a call or while the user is talking with the outgoing call terminal 21, the user presses the unwanted call designation button or other buttons of the incoming call terminal 31. In this manner, the incoming call terminal 31 transmits the receiver side report to the call relay device 10 (step S21d). The evaluation attribute included in the receiving side report indicates that the call was an unwanted call if the user presses an unwanted call designation button, or dials a specific number to report that the call was an unwanted call, for example. The evaluation attribute also indicates that the call was not an unwanted call if the user presses a non-unwanted call designation button, or dials a specific number to report that the call was not an unwanted call, for example. After the incoming call terminal 31 transmits the receiving side report, the user presses a telephone call end button or other buttons of the incoming call terminal 31 or the outgoing call terminal 21 cuts the telephone call off so that the incoming call terminal 31 releases the call (step S22d).

When the incoming call terminal 31 transmits the receiving side report in step S21d, the receiving side report acquisition section 13 of the call relay device 10 acquires a receiving side report (step S23d). After the receiving side report acquisition section 13 acquires the receiving side report, the call attribute setting section 14 acquires, from the call history table of the call history storage section 12, call history information regarding the call of which the incoming call terminal 31 is the receiver (step S24d). Since the telephone number of the receiver can be uniquely specified in the call history table of the call history storage section 12 as described above, only single call history information exists in which the incoming call terminal 31 is the receiver. This call history information is related to the most recent call that the incoming call terminal 31 received. After the call history information is acquired, the call attribute setting section 14 correlates the telephone number of the caller and the telephone number of the receiver included in the call history information, and the evaluation attribute indicated in the receiving side report acquired by the receiving side report acquisition section 13 and registers the correlated information in the call attribute storage section 15 (step S25d). In this manner, information regarding whether or not the call from a certain caller to a certain receiver is an unwanted call is accumulated in the call attribute storage section 15.

The operation of the call relay system in a case where the outgoing call terminal 21 makes a call with the telephone number not being reported and the incoming call terminal 31 transmits the receiving side report before the call is released has been described above.

By performing the process described above, unwanted calls can be specified by retrieving the call attribute storage section 15. Various services can therefore be provided using information stored in the call attribute storage section 15. Examples of the services include rejecting unwanted calls, adding a mark to incoming calls indicating that they are unwanted calls, and adding, to incoming calls without reporting its telephone number, a mark indicating that they are not unwanted calls if the calls were registered as non-unwanted calls.

As described above, according to the exemplary embodiment, the relay section 11 of the call relay device 10 correlates the telephone number of the caller of the call with the telephone number of the receiver of the call and registers the correlated information in the call history storage section 12. The call attribute setting section 14 acquires, from the call history storage section 12, a call indicated by the receiving side report acquired from the incoming call terminal 31, correlates the evaluation attribute indicated by the receiving side report with the telephone number of the caller of the acquired call and the telephone number of the receiver of the acquired call and then registers the correlated information in the call attribute storage section 12.

With this configuration, when the outgoing call terminal 21 makes a call with or without reporting the telephone number, if the user determines the call as an unwanted call, the call relay device 10 specifies the outgoing call terminal 21 by transmitting the receiving side report indicating that the call is an unwanted call from the incoming call terminal 31 to the call relay device 10. The specified call is then registered in the call attribute storage section 15 as an unwanted call for that user. Since the unwanted calls can be specified by retrieving the call attribute storage section 15, novel service can be provided using the information registered in the call attribute storage section 15. Such services may include rejecting unwanted calls, adding a mark to incoming calls indicating that they are unwanted calls, and adding, to incoming calls without reporting is telephone number, a mark indicating that they are not unwanted calls if the calls were registered as non-unwanted calls.

The relay section of the call relay device correlates the telephone number of the outgoing call terminal and the telephone number of the incoming call terminal indicated by the call and registers the call history information including the telephone numbers of the outgoing call terminal and the incoming call terminal in the call history storage section. The call attribute setting section acquires, from the call history storage section, the call history information regarding the call indicated by the receiving side notification acquired from the incoming call terminal, correlates the evaluation attribute indicated by the receiving side notification with the telephone numbers of the outgoing call terminal and the incoming call terminal included in the call history information regarding the acquired call and then registers the correlated information in the call attribute storage section.

With this configuration, even when the outgoing call terminal makes a call without reporting its telephone number, if the user determines the call as an unwanted call, the call relay device specifies the outgoing call terminal by transmitting the receiving side report indicating that the call is an unwanted call from the incoming call terminal to the call relay device. The specified call is then registered in the call attribute storage section as an unwanted call for that user. Accordingly, since the unwanted calls can be specified by retrieving the call attribute storage section, an exemplary advantage according to the invention is that it is possible to provide a novel service using the information registered in the call attribute storage section. Such services may include rejecting unwanted calls, adding, to incoming calls without reporting is telephone number, a mark indicating that they are not unwanted calls.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

Although the telephone numbers of the receiver stored in the call history storage section 12 are uniquely specified in the exemplary embodiment, the invention is not limited thereto. For example, the following processes may provide similar effects as those of the exemplary embodiment. In particular, in step S14 (that is, one of steps S14a to S14d) described above, the relay section 11 correlates the telephone number of the caller of the acquired call, the telephone number of the receiver of the acquired call and the calling time of the call and registers the correlated information in the call history storage section 12 without overwriting the data. In step S23 (that is, one of steps S23a to S23d) described above, the call attribute setting section 14 retrieves the call history table stored in the call history storage section 12 to acquire the most recent information regarding the call of which the receiver is the incoming call terminal 31 and the calling time is the most recent.

In the exemplary embodiment, the receiving side report transmitted by the incoming call terminal 31 indicates the evaluation attribute regarding the most recent call received by the incoming call terminal 31, but the invention is not limited thereto. For example, the following processes may be performed. In step S14 (that is, one of steps S14a to S14d) described above, the relay section 11 correlates the telephone number of the caller, the telephone number of the receiver of the acquired call and the calling time of the call and registers the correlated information in the call history storage section 12 without overwriting the data. In one of steps S21c, S21d, S22a and S22b the incoming call terminal 31 transmits the receiving side report to the call relay device 10. At this time, the call relay device 10 makes an announcement to encourage the incoming call terminal 31 to input the hour and minute of the time at which the incoming call terminal 31 received the call. In response to this, the user inputs the calling time by pressing the numerical button of the incoming call terminal 31, so that the call relay device 10 acquires the time input from a tone signal of the numerical button. Next, in step S23 (that is, one of steps 23a to 23d) described above, the call attribute setting section 14 acquires, by retrieving the call history table registered in the call history storage section 12, information in which the receiver is the incoming call terminal 31 and the calling time is the most recent to the calling time acquired from the tone signal. With this process, the evaluation attribute may be provided not only to the most recent call but to the calls which were received before the most recent call.

The program may cause the call relay device 10 to function as the relay section 11, the receiving side report acquisition section 13 and the call attribute setting section 14.

A program for implementing the functions of the relay section 11, the receiving side report acquisition section 13 and the call attribute setting section 14 illustrated in FIG. 1 may be recorded in a computer-readable recording medium. The program recorded on the recording medium may be read into a computer system and the call relay device 10 may be caused to function as the relay section 11, the receiving side report acquisition section 13 and the call attribute setting section 14.

The computer system used herein includes hardware, such as an OS and peripheral devices.

The computer system may also include a homepage providing environment (or a display environment) so long as such an environment utilizes a WWW system.

Examples of the computer-readable recording medium include a portable medium, such as a flexible disc, a magneto-optical disc, a ROM and a CD-ROM and a storage device, such as hard disk incorporated in the computer system. Examples of the computer-readable recording medium include a medium which dynamically holds a program for a short time. Such a medium includes a communication line for transmitting a program via a communication line, such as a network, like the Internet, and a telephone line. Examples of the computer-readable recording medium may also include a medium which holds the program for a certain period of time to implement the communication described above. Such a medium may include a volatile memory incorporated in the computer system used as a server or a client. The above-described program may implement only part of the above-described functions. The above-described functions may be implemented in combination with programs previously recorded in the computer system.

## Claims

1. A call relay system comprising:
an outgoing call terminal;
an incoming call terminal; and
a call relay device which relays a call from the outgoing call terminal to the incoming call terminal, the call relay device comprising:
a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section;
a receiving side report acquisition section which acquires, from the incoming call terminal, a receiving side report indicating an evaluation attribute regarding the call; and
a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information regarding the acquired call and registers the correlated information in the call attribute storage section.

2. The call relay system according to claim 1,
wherein the relay section acquires a call, and the relay section overwrites, among call history information regarding calls indicating telephone numbers of an incoming call terminal and an outgoing call terminal registered in the call history storage section, call history information regarding a call indicating a telephone number of an incoming call terminal which is the same as a telephone number of an incoming call terminal indicated by the acquired call, with the telephone numbers of the outgoing call terminal and the incoming call indicated by the acquired call and registers overwritten information, and
wherein the call attribute setting section acquires, as the call history information regarding the call indicated by the acquired receiving side report, call history information regarding a call indicating a telephone number of a incoming call terminal which is the same as the telephone number of the incoming call terminal which transmitted the receiving side report, among the call history information regarding the calls indicating the telephone numbers of the incoming call terminal and the outgoing call terminal registered in the call history storage section.

3. The call relay system according to claim 1 or 2,
wherein the relay section acquires a call, and the relay section correlates telephone numbers of an outgoing call terminal and an incoming call terminal indicated by the acquired call with calling time indicated by the acquired call and registers call history information including the telephone numbers of the outgoing call terminal and the incoming call terminal and the calling time in the call history storage section, and
wherein the call attribute setting section acquires, as the call history information regarding the call indicated by the acquired receiving side report, call history information regarding a call indicating a telephone number of an incoming call terminal which is the same as the telephone number of the incoming call terminal which transmitted the receiving side report and indicating calling time which is most recent to current time, among call history information regarding calls indicating telephone numbers of an incoming call terminal and an outgoing call terminal and calling time registered in the call history storage section.

4. The call relay system according to one of claims 1 to 3,
wherein the receiving side report transmitted by the incoming call terminal includes an evaluation attribute regarding a call and time at which the call is received,
wherein the relay section acquires a call, and the relay section correlates telephone numbers of an outgoing call terminal and an incoming call terminal indicated by the acquired call with calling time indicated by the acquired call and registers call history information including the telephone numbers of the outgoing call terminal and the incoming call terminal and the calling time in the call history storage section, and
wherein the call attribute setting section acquires, as the call history information regarding the call indicated by the acquired receiving side report, call history information regarding call indicating a telephone number of an incoming call terminal which is the same as the telephone number of the incoming call terminal which transmitted the receiving side report and indicating calling time which is most recent to time indicated by the receiving side report, among call history information regarding calls indicating telephone numbers of an incoming call terminal and an outgoing call terminal and calling time registered in the call history storage section.

5. A call relay device which relays a call to an incoming call terminal connected via an incoming call network from an outgoing call terminal connected via an outgoing call network, the call relay device comprising:
a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section;
a receiving side report acquisition section which acquires, from the incoming call terminal, a receiving side report indicating an evaluation attribute regarding the call; and
a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information and registers the correlated information in the call attribute storage section.

6. A call relay method which uses a call relay system including an outgoing call terminal, an incoming call terminal and a call relay device which relays a call from the outgoing call terminal to the incoming call terminal, the method comprising:
relaying the call from the outgoing call terminal to the incoming call terminal;
correlating a telephone number of the outgoing call terminal indicated by the call with a telephone number of the incoming call terminal indicated by the call;
registering call history information including the telephone numbers of the outgoing call terminal and the incoming call terminal in a call history storage section;
acquiring, from the incoming call terminal, a receiving side report indicating an evaluation attribute regarding the call;
acquiring, from the call history storage section, the call history information regarding the call indicated by the receiving side report;
correlating the evaluation attribute indicated by the receiving side report with the telephone numbers of the outgoing call terminal and the incoming call terminal included in the acquired call history information regarding the acquired call; and
registering the correlated information in a call attribute storage section.

7. A program which causes a call relay device which relays a call to an incoming call terminal connected via an incoming call network from an outgoing call terminal connected via an outgoing call network to function as:
a relay section which relays the call from the outgoing call terminal to the incoming call terminal, correlates a telephone number of the outgoing call terminal indicated by the call with a telephone number of the incoming call terminal indicated by the call and registers call history information including the telephone numbers of the outgoing call terminal and the incoming call terminal in a call history storage section;
a receiving side report acquisition section which acquires, from the incoming call terminal, a receiving side report indicating an evaluation attribute regarding the call; and
a call attribute setting section which acquires, from the call history storage section, the call history information regarding the call indicated by the acquired receiving side report, correlates the evaluation attribute indicated by the receiving side report with the telephone numbers of the outgoing call terminal and the incoming call terminal included in the acquired call history information regarding the acquired call and registers the correlated information in the call attribute storage section.
